# EUROPEAN PATENT SPECIFICATION

(11) **EP 2 957 943 B1**
(45) Date of publication and mention of the grant of the patent: **27.02.2019**
(21) Application number: 15172500.9
(22) Date of filing: 17.06.2015
(51) Int. Cl.: G02B 19/00, G02F 1/1335

(54) **LENS-ASSEMBLY FOR A BACKLIGHT**
LINSENANORDNUNG FÜR EIN RÜCKBELEUCHTUNGSEINHEIT
ENSEMBLE DE LENTILLES POUR UN MODULE DE RÉTRO-ÉCLAIRAGE

(30) Priority: 20.06.2014 KR 20140076075
(43) Date of publication of application: 23.12.2015
(73) Proprietor: Samsung Display Co., Ltd., Gyeonggi-do (KR)
(72) Inventor: Hwang, Seong-Yong, 302-2905 Asan-si, Chungcheongnam-do (KR); Lee, Sang Won, 408-904 Seoul (KR); Kim, Joong Hyun, 203-1202 Asan-si, Chungcheongnam-do (KR); Song, Min-Young, 202-705 Asan-si, Chungcheongnam-do (KR); Yoon, Byung-Seo, Hwaseong-si, Gyeonggi-do (KR); Kim, Gi Cherl, 6122-901 Suwon-si, Gyeonggi-do (KR)
(74) Representative: Dr. Weitzel & Partner

(56) References cited:
- US-A1- 2005 243 576
- US-A1- 2011 149 548
- US-A1- 2014 071 674

## Description

### BACKGROUND

### (a) Field

The invention relates to a lens assembly for a backlight light source and a backlight unit including the lens assembly.

### (b) Description of the Related Art

US 2011/149548 A1 describes a linear lamp comprising a linear array of LEDs and an elongate lens disposed over the array of LEDs. The lens comprises a generally concave central portion (divergent) and generally convex edge portions (convergent) and is configured such that in operation a variation in illuminance is less than 10% over an angular range of at least 90°.

A liquid crystal display, which is not a self light-emitting device, typically includes a lighting system such as a backlight.

A cold cathode fluorescent lamp ("CCFL"), which has been used for a conventional backlight light-source, consumes high power and has a short lifespan. Accordingly, in recent, backlight systems using light emitting diodes ("LED"s) having a long lifespan with low power consumption and light weight, are widely used to allow the backlight system to be slim.

### SUMMARY

In general, light emitted by a light emitting diode ("LED") element in a backlight system has linearity, such that intensity of light discharged to a region that is perpendicular to the LED element has the maximum value, and the intensity of light discharged to a region that is not perpendicular to the LED element may have a value less than the maximum value. Therefore, in such a backlight system using the LED element, the intensity of output light is not substantially uniform and may have different intensity depending on the region.

Further, when the LEDs for emitting different colors are used to realize a backlight system for emitting desired colors, the different colors may not be effectively mixed due to the linearity of the LEDs described above.

In the backlight system, gaps between the LED elements may be reduced with increased number of LED elements for increased uniformity of the color light, and manufacturing cost is accordingly increased.

It is the object of the present invention to provide a lens for a backlight light source for mixing light of different colors substantially effectively without increasing the number of the LED elements, and a backlight unit including the lens. This object is achieved by the subject matter of independent claims 1 and 11. Preferred embodiments are defined in the sub claims.

An exemplary embodiment of the invention provides a lens assembly for a backlight light source, including: a plurality of light emitters, where each of the light emitters includes a first light-emitting device and a second light-emitting device, which emit light having different colors from each other; and a lens disposed on the light emitter to cover the light emitter. In such an embodiment, the lens is substantially symmetric with respect to a center axis and has a bar shape extending in a direction parallel to the center axis, the light emitters are spaced apart from each other in the direction parallel to the center axis, and the first light-emitting device and the second light-emitting device are spaced apart from each other in the direction parallel to the center axis.

In an exemplary embodiment, light emitted by the light emitters to the lens may be totally reflected on an external top surface of the lens, and the totally reflected light may be diffused in a first direction, which is substantially orthogonal to the center axis, through an external side surface of the lens.

When addressed in the present disclosure, the term external top surface may refer to a top surface provided for facing away from the light emitters respective the light-emitting devices and especially provided for facing to a side on which a liquid crystal layer of a liquid crystal display is provided. The term external side surface may refer to a surface facing in a direction parallel to the extension of a liquid crystal layer of a liquid crystal display and/or parallel to the extension of several layers arranged one upon another of a liquid crystal display. Especially the external top surface faces in a direction of a viewer of a picture displayed on a liquid crystal display and/or the external side surface faces in a direction across the width or the height of a liquid crystal display.

In an exemplary embodiment the lens respective a single lens or each lens is disposed on a number of light emitters to cover the light emitters, whereby the number is greater than two, three, four, five, six or even more.

In an exemplary embodiment, first light emitted by the first light-emitting device and second light emitted by the second light-emitting device may be diffused in the first direction and mixed with each other.

In an exemplary embodiment, the lens may include two internal side surfaces corresponding to side surfaces of the light emitters and an internal top surface corresponding to a top surface of the light emitters, the internal top surface may include a first slanted surface which allows the lens to be thinner as moving away from the internal side surface to the center axis, and the two internal side surfaces and the internal top surface of the lens may define a shape substantially symmetrical with respect to the center axis.

In an exemplary embodiment, the first slanted surface of the internal top surface may form a first angle with a bottom surface of the lens, and the first angle is in a range of about zero (0) degree to about 45 degrees.

In an exemplary embodiment, the internal top surface of the lens may further include a second slanted surface inclined in a direction which is not substantially parallel to the first slanted surface, which means that the second slanted surface is angled to the first slanted surface, preferably however with a small angle.

In an exemplary embodiment, the lens may include two external side surfaces corresponding to internal side surfaces thereof, and an external top surface t corresponding to an internal top surface thereof, where the external top surface of the lens may include a second slanted surface which allows a height of the lens to increase as moving away from the center axis to the external top surface, and the two external side surfaces and the external top surface of the lens may define a shape substantially symmetrical with respect to the center axis.

In an exemplary embodiment, the lens has a first thickness on the center axis and becomes thicker as it becomes distant from the center axis, and the first thickness is greater than about 0.5 millimeter (mm).

In an exemplary embodiment, the external top surface of the lens may have a predetermined curvature on the center axis.

In an exemplary embodiment, light emitted by the light emitters may be refracted on the internal top surface, the refracted light may be totally reflected on the external top surface, and the totally reflected light may be diffused in a first direction, which is substantially orthogonal to the center axis, through the external side surface. In such an embodiment, first light emitted by the first light-emitting device and second light emitted by the second light-emitting device may be diffused in the first direction and mixed with each other.

In an exemplary embodiment, the lens may include at least one of a first serration portion defined on the internal top surface, and a second serration portion defined on the external side surface, where each of the first and second serration portions may include a recess portion and a protrusion portion that are alternately disposed with each other.

In an exemplary embodiment, the at least one of the first serration portion and the second serration portion may have a prism form in which a valley and a ridge are alternately disposed.

In an exemplary embodiment, at least one of the valley and the ridge may have a predetermined curvature.

In an exemplary embodiment, the at least one of the first serration portion and the second serration portion may have a form defined by a plurality of hemi-cylinders.

Another embodiment of the invention provides a backlight unit including a plurality of lens assemblies spaced apart from each other in a first direction, where each of the lens assemblies includes a plurality of light emitters, wherein each of the light emitters comprises a first light-emitting device and a second light-emitting device, and the first and second light-emitting devices emit light having different colors from each other, and a lens disposed on the light emitters and to cover the light emitters, where the lens is substantially symmetric with respect to a center axis extending in a second direction, which is substantially orthogonal to the first direction, and has a bar shape extending in the second direction, the light emitters are spaced apart from each other in the second direction, and the first light-emitting device and the second light-emitting device of each of the light emitters are spaced apart from each other in the second direction.

According to exemplary embodiments of the lens assembly for a backlight light source and the backlight unit including the lens assembly according to the invention, the light of different colors are effectively mixed with each other without increasing the number of the light emitters.

### BRIEF DESCRIPTION OF THE DRAWINGS

The above and other features of the invention will become more apparent by describing in further detail exemplary embodiments thereof with reference to the accompanying drawings, in which:
FIG. 1 shows a plan view of an exemplary embodiment of a backlight unit including a lens assembly for a backlight light source, according to the invention;
FIG. 2 shows a perspective view of an exemplary embodiment of a lens assembly of a backlight light source, according to the invention;
FIG. 3 shows a cross-sectional view of an exemplary embodiment of a lens of a lens assembly for a backlight light source, according to the invention;
FIG. 4 shows a schematic view of an exemplary embodiment of a lens assembly for a backlight light source, according to the invention;
FIG. 5 shows a schematic view for describing a path of light passing through a conventional lens assembly for a backlight light source;
FIG. 6 shows a schematic view for describing a path of light passing through an exemplary embodiment of a lens assembly for a backlight light source, according to the invention;
FIG. 7 shows a schematic view for describing mixture of light passing through a conventional lens assembly for a backlight light source;
FIG. 8 shows a schematic view for describing mixture of light passing through an exemplary embodiment of a lens assembly for a backlight light source, according to the invention;
FIG. 9 shows a perspective view of a part of an exemplary embodiment of a backlight unit according to the invention;
FIG. 10 shows a perspective view of a part of an exemplary embodiment of a lens assembly for a backlight light source, according to the invention;
FIG. 11 shows a perspective view of part of a lens assembly for a backlight light source according to the invention;
FIG. 12 to FIG. 14 show perspective views of a serration portion of alternative exemplary embodiments of a lens assembly for a backlight light source, according to the invention;
FIG. 15 and FIG. 16 are graphs showing results from an exemplary experiment;
FIG. 17 shows a cross-sectional view of an alternative exemplary embodiment of a lens of a lens assembly for a backlight light source, according to the invention; and
FIG. 18 shows a cross-sectional view of an alternative exemplary embodiment of a lens of a lens assembly for a backlight light source, according to the invention.

### DETAILED DESCRIPTION

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Exemplary embodiments of the invention will now be described with reference to accompanying drawings.

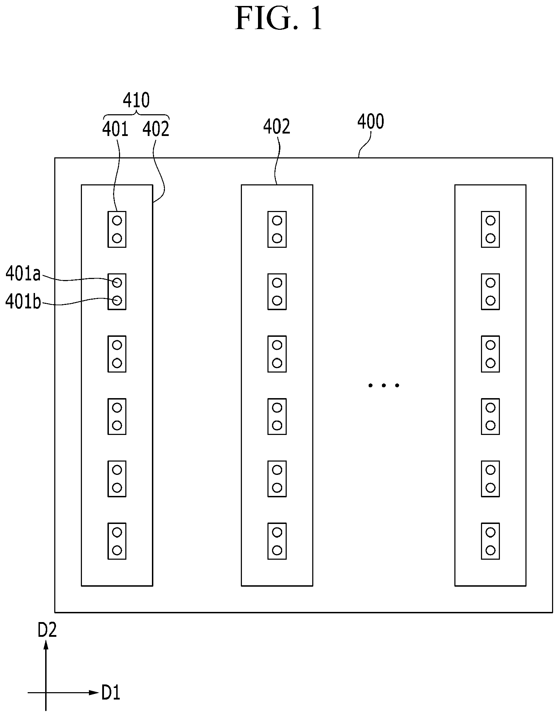

Hereinafter, an exemplary embodiment of a backlight unit including a lens assembly for a backlight light source, according to the invention, will now be described with reference to FIG. 1.

FIG. 1 shows a plan view of an exemplary embodiment of a backlight unit including a lens assembly for a backlight light source, according to the invention.

Referring to FIG. 1, an exemplary embodiment of the backlight unit 400 including a lens assembly for a backlight light source includes a plurality of lens assemblies 410 disposed along a first direction D1 at regular intervals, e.g., with a constant interval. The lens assemblies 410 may extend in a second direction D2 that is orthogonal to the first direction D1.

Each lens assembly 410 includes a plurality of light emitters 401 disposed at regular intervals in a second direction D2, and a lens 402 disposed on the light emitters 401 to cover the light emitters 401 and extending in the second direction D2 to have a bar shape. Each light emitter 401 includes a first light-emitting device 401a and a second light-emitting device 401b, which are spaced apart from each other in the second direction D2.

The first light-emitting device 401a and the second light-emitting device 401b emit light having different colors from each other. The first light-emitting device 401a and the second light-emitting device 401b may emit one of three primary colors, e.g., red, green and blue, or magenta, green and cyan. In such an embodiment, the first light-emitting device 401a and the second light-emitting device 401b may include a light emitting diode ("LED").

In an exemplary embodiment, as described above, each of the light emitters 401 includes a first light-emitting device 401a and a second light-emitting device 401b for expressing different colors, but the invention is not limited thereto. In an alternative exemplary embodiment, and each of the light emitters 401 may include three or more light-emitting devices for expressing different colors, in which the three or more light-emitting devices that express different colors are spaced apart from each other and are disposed in a direction in which the lens 402 is provided.

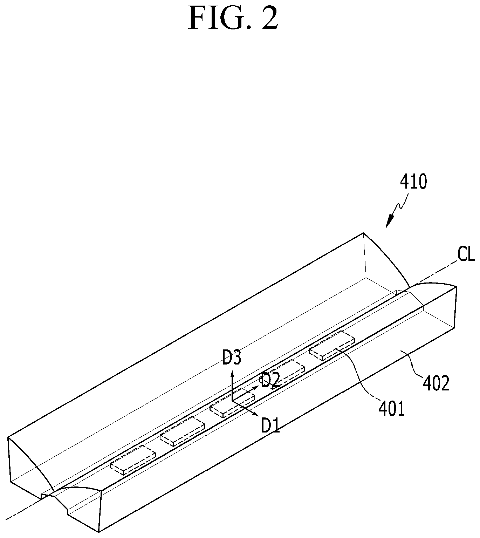

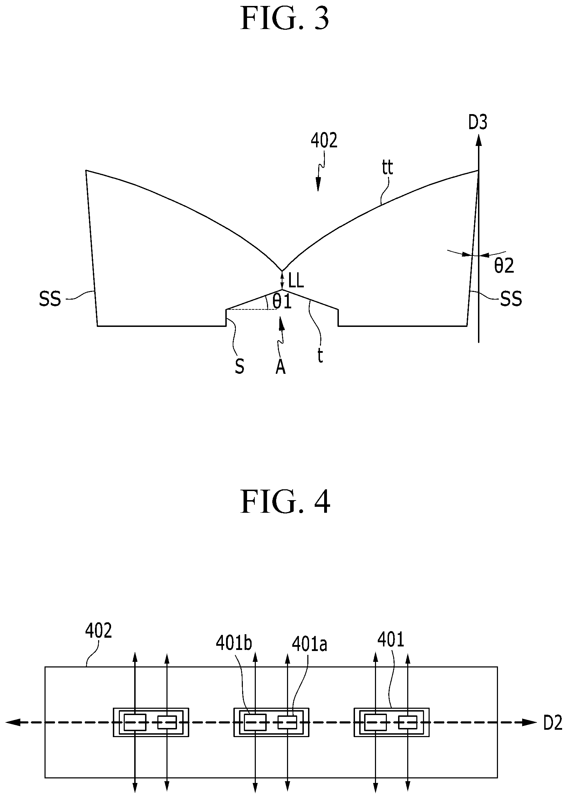

An exemplary embodiment of a lens assembly 410 for a backlight light source according to the invention will now be described in greater detail with reference to FIG. 2 and FIG. 3. FIG. 2 shows a perspective view of an exemplary embodiment of a lens assembly of a backlight light source, according to the invention, and FIG. 3 shows a cross-sectional view of an exemplary embodiment of a lens of a lens assembly for a backlight light source, according to the invention.

Referring to FIG. 2 and FIG. 3, an exemplary embodiment of the lens assembly 410 for a backlight light source includes a plurality of light emitters 401 disposed at regular intervals along the second direction D2, and a lens 402 disposed on the light emitters 401 to cover the light emitters 401 and extending in the second direction D2 to have a bar shape.

The lens 402 has a groove (A) that allows the light emitters 401 to be disposed at a lower portion thereof.

Referring to FIG. 3, by the groove (A) defined at the lower portion of the lens 402, an internal surface of the lens 402 includes two internal side surfaces (S) that correspond to a side surface of the light emitters 401, and an internal top surface (t) that corresponds to a top portion surface of the light emitters 401. The two internal side surfaces (S) and the internal top surface (t) are substantially symmetrical to each other in a direction that is parallel to the first direction D1 with respect to a center axis (CL) extending in the second direction D2. In such an embodiment, the two internal side surfaces (S) and the internal top surface (t) may define a shape substantially symmetrical with respect to the center axis (CL).

In an exemplary embodiment, the internal top surface (t) of the lens 402 may have a slanted surface form such that the groove (A) may become higher toward the center axis (CL) from the internal side surface (s). In such an embodiment, the internal top surface (t) of the lens 402 has a slanted surface form such that the lens 402 may become thinner toward the center axis (CL) from the internal side surface (S). The slanted surface of the internal top surface (t) of the lens 402 forms a first angle (θ1) with a bottom surface of the lower portion of the lens 402. The first angle (θ1) may be in a range of about zero (0) degree to about 45 degrees.

An external surface of the lens 402 includes two external side surfaces (SS) and an external top surface (tt). The external side surface (SS) of the lens 402 has a second angle (θ1) with respect to the third direction D3 that is perpendicular to the first direction D1 and the second direction D2. The external top surface (tt) of the lens 402 is formed to have a slanted surface so that it may become higher as it approaches the external side surface (SS) from the center axis (CL).

According to an exemplary embodiment, as described above, the lens 402 may have a first thickness H1 that is a minimum thickness from the center axis (CL), and the lens 402 may have a thickness that increases as being away from the center axis (CL). The first thickness H1 may be greater than about 0.5 millimeters (mm).

An exemplary embodiment of the lens assembly 410 for a backlight light source according to the invention includes a plurality of light emitters 401 disposed at regular intervals in the second direction D2, and a lens 402 disposed on the light emitters 401 to cover the light emitters 401, extending in the second direction D2 to have a bar shape, and having a thickness increasing as being away from the center axis. In such an embodiment, light emitted from the light emitters 401 is diffused by the lens 402 mainly in the first direction D1 that is orthogonal to the second direction D2, which will be described later in greater detail.

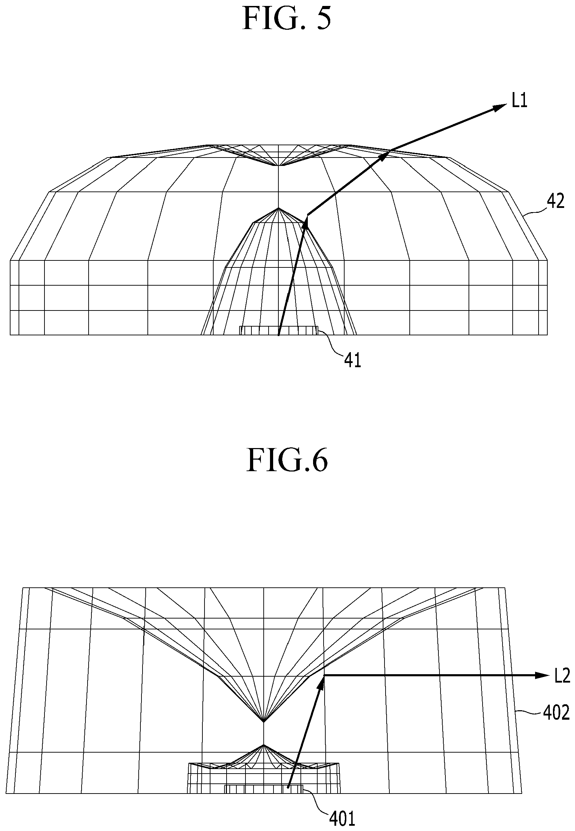

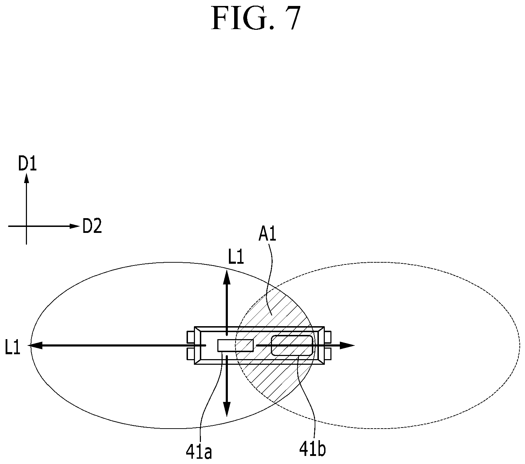

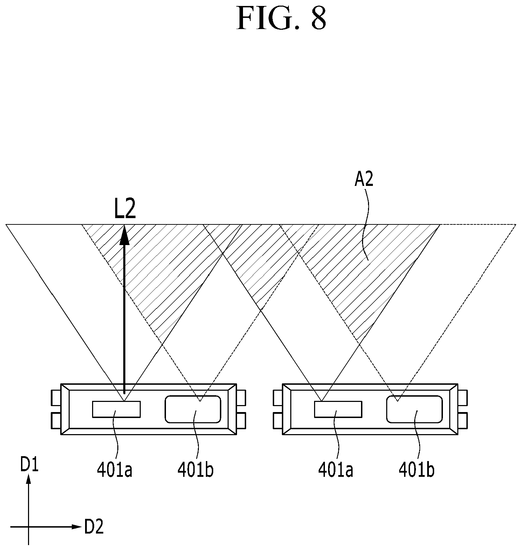

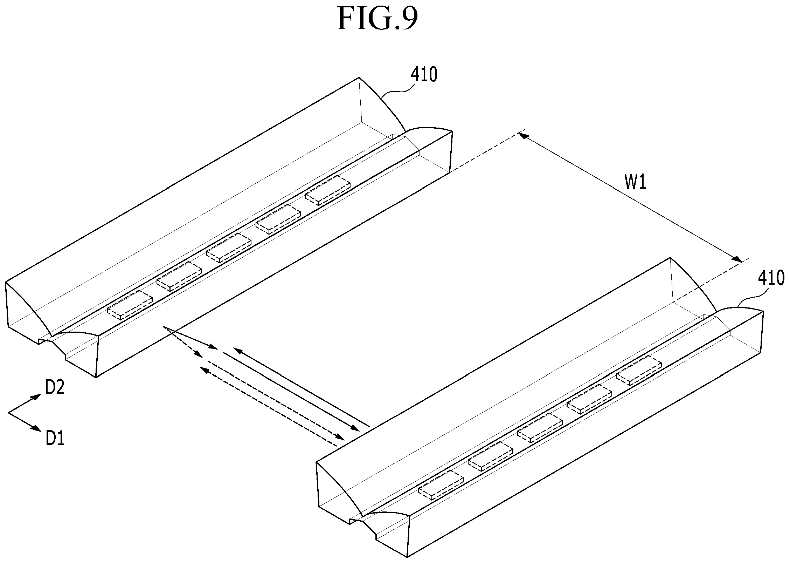

A path of light passing through an exemplary embodiment of a lens assembly for a backlight light source according to the invention will now be described with reference to FIG. 5 to FIG. 9. FIG. 5 shows a schematic view for describing a path of light passing through a conventional lens assembly for a backlight light source, and FIG. 6 shows a schematic view for describing a path of light passing through an exemplary embodiment of a lens assembly for a backlight light source according to the invention. FIG. 7 shows a schematic view for describing mixture of light passing through a conventional lens assembly for a backlight light, and FIG. 8 shows a schematic view for describing mixture of light passing through an exemplary embodiment of a lens assembly for a backlight light source according to the invention. FIG. 9 shows a perspective view of part of an exemplary embodiment of a backlight unit according to the invention.

Referring to FIG. 5, the lens 42 of the conventional lens assembly for a backlight light source is provided on the light-emitting device 41 to cover the light-emitting device. As shown in FIG. 5, the lens 42 of the conventional lens assembly may be concave in the center, and become more convex as it approaches the edge thereof.

Referring to FIG. 5 and FIG. 7, the light L1 emitted by the light-emitting device 41 passes through the lens 42, and the light L1 is refracted on an internal surface of the lens 42, again refracted on an external surface of the lens 42 and then spread in a direction with a predetermined angle with respect to a surface of the lens 42. Therefore, the light L1 is spread out in the first direction D1, the second direction D2, and the third direction D3 along the surface of the lens 42 such that the light L1 is spread out in a circular or oval manner with respect to the light-emitting device 41.

As described, while passing through the lens 42 of the conventional lens assembly for a backlight light source, the light emitted by a third light-emitting device 41a and a fourth light-emitting device 41b for emitting different light is spread out in a circular or oval manner with respect to the light-emitting devices 41a and 41b, the light emitted by the third light-emitting device 41a and the fourth light-emitting device 41b may not be effectively mixed, and an area of a first region A1 in which light emitted by the third light-emitting device 41a is mixed with light emitted by the fourth light-emitting device 41b is small. Therefore, in such a backlight source including the conventional lens assembly, the light-emitting devices may be disposed to be near each other and the number of light-emitting devices may be increased, to effectively mix the light emitted by the light-emitting devices 41a and 41b for emitting different colors of light.

Referring to FIGS. 3, 6 and 8, the light L2 emitted by the light emitters 401 (e.g., one of the first light-emitting device 401a and the second light-emitting device 401b) of an exemplary embodiment of the lens assembly for a backlight light source, according to the invention, is refracted on the internal surface of the lens 402 corresponding to (e.g., facing) a top surface of the light emitters 401, totally reflected at the external top surface (tt), and spread out in a direction that is orthogonal to the center axis (CL), that is, the first direction D1, through the external side surface (SS) opposite to the internal side surface (S) corresponding to (e.g., facing) a side surface of the light emitters 401.

Therefore, as shown in FIG. 8, the light emitted by the first light-emitting device 401a and the second light-emitting device 401b for emitting different light is totally reflected and diffused in the first direction D1 such that an area of a second region A2, in which the light emitted by the first light-emitting device 401a is mixed with the light emitted by the second light-emitting device 401b, is increased. In such an embodiment, the light emitted by the first light-emitting device 401a and the second light-emitting device 401b is further spread out in the first direction D1.

As described above, in an exemplary embodiment, the light emitted by the light emitters 401 is diffused in the first direction D1 that is a horizontal direction, when a gap W1 between the lens assemblies 410 is widened as shown in FIG. 9, such that light is emitted in the wide area. Accordingly, the backlight light source for emitting light mixed with a plurality of colors may be effectively realized without increasing the number of the light emitters 401.

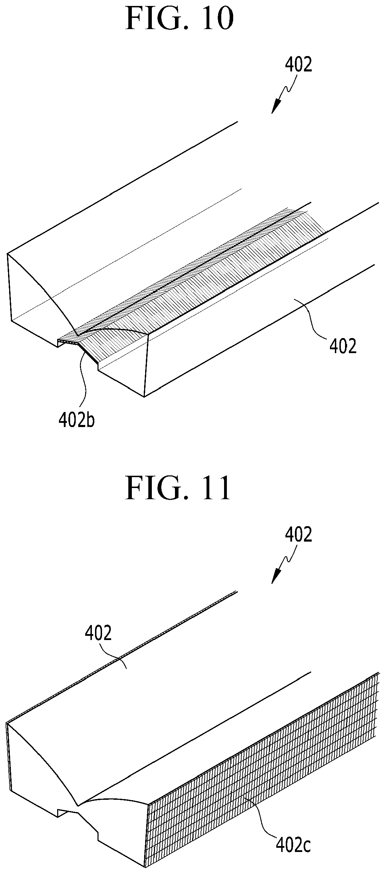

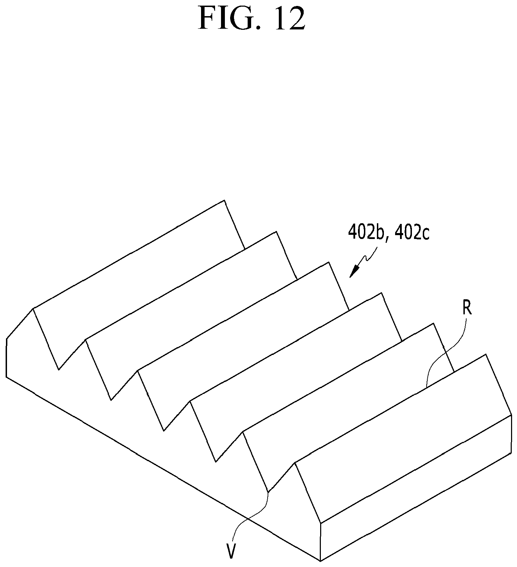

An alternative exemplary embodiment of a lens assembly for a backlight light source, according to the invention, will now be described with reference to FIG. 10 and FIG. 12 to FIG. 14. FIG. 10 shows a perspective view of a part of an exemplary embodiment of a lens assembly for a backlight light source, according to the invention. FIG. 12 to FIG. 14 show perspective views of a serration portion of exemplary embodiments of a lens assembly for a backlight light source, according to the invention.

Exemplary embodiments of a lens assembly for a backlight light source shown in FIG. 10 and FIGS. 12 to 14 are substantially the same as exemplary embodiments of a lens assembly for a backlight light source described above with reference to FIGS. 1 to 3 except for a serration portion 402b defined on a surface of the lens 402, and any repetitive detailed description thereof will hereinafter be omitted or simplified.

Referring to FIG. 10, in an exemplary embodiment, a first serration portion 402b is defined on the internal surface of the lens 402 of the lens assembly 410 for a backlight light source. In such an embodiment, first serration portion 402b has a recess portion and a protrusion portion. In such an embodiment, as shown in FIGS. 12 to 14, the recess portion and the protrusion portion of the first serration portion 402b may be alternately and repeatedly disposed in the second direction D2, in which the lens 402 extends. In such an embodiment, a distance between adjacent recess portions and a distance between adjacent protrusion portions may be substantially the same as each other.

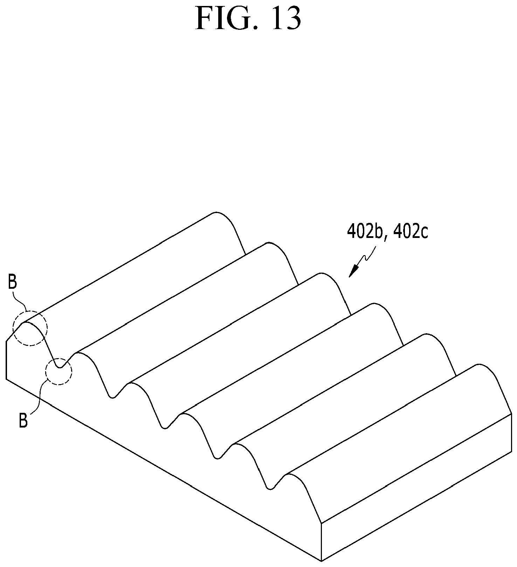

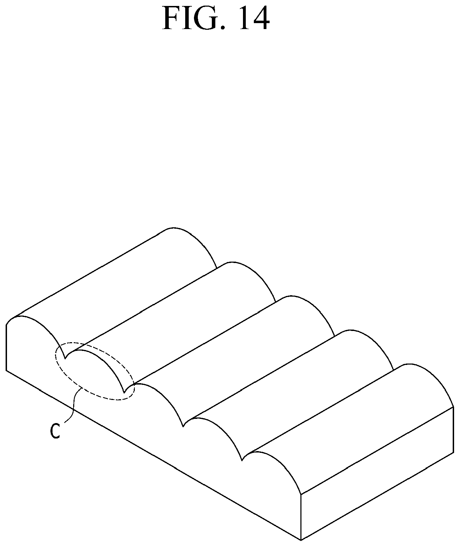

In an exemplary embodiment, as shown in FIG. 12, the recess portion and the protrusion portion of a serration portion 402b (hereinafter a first serration portion) may define a prism-like shape, in which a valley (V) and a ridge (R) are alternately disposed. In an alternative exemplary embodiment, as shown in FIG. 13, the recess portion and the protrusion portion of the first serration portion 402b may define a prism-like shape, in which the valley and the ridge are alternately disposed, and the valley and the ridge may have a predetermined curvature (B). In such an embodiment, as shown in FIG. 13, both of the valley and the ridge of the first serration portion 402b may have a predetermined curvature, but not being limited thereto. In another alternative exemplary embodiment of the invention, one of the valley and the ridge of the first serration portion 402b may have a predetermined curvature. In such an embodiment, as shown in FIG. 14, the first serration portion 402b may have a shape in which a plurality of hemi-cylinders (C) is arranged in the second direction D2, and the hemi-cylinders (C) may extend in a direction substantially parallel to the second direction D2.

In such an embodiment, the first serration portion 402b may have a pitch in a range of about 100 micrometers (µm) to about 500 µm, and a height in a range of about 80 µm to about 120 µm. An angle between a virtual line extending to the adjacent valley of the first serration portion 402b and a slanted surface between the valley and the ridge of the first serration portion 402b may be in a range of about 10 degrees to about 60 degrees.

Another alternative exemplary embodiment of a lens assembly for a backlight light source, according to the invention, will now be described with reference to FIG. 11 and FIG. 12 to FIG. 14. FIG. 11 shows a perspective view of a part of an exemplary embodiment of a lens assembly for a backlight light source according to the invention.

Exemplary embodiments of a lens assembly for a backlight light source shown in FIGS. 11 are substantially the same as exemplary embodiments of a lens assembly for a backlight light source described above with reference to FIGS. 10 except that a serration portion 402c is defined on an external surface of the lens 402, and any repetitive detailed description thereof will hereinafter be omitted or simplified.

Referring to FIG. 11, in an alternative exemplary embodiment, a serration portion 402c (hereinafter, a second serration portion) is defined on an external side surface (SS) of the external surface of the lens 402 of the lens assembly 410. In such an embodiment, the recess portion and the protrusion portion of the second serration portion 402c may be alternately and repeatedly disposed in the second direction D2.

In such an embodiment, as shown in FIG. 12, the recess portion and the protrusion portion of the second serration portion 402c can have a prism form in which a valley (V) and a ridge (R) are alternately disposed. Alternatively, as shown in FIG. 13, the recess portion and the protrusion portion of the second serration portion 402c have a prism form in which the valley and the ridge are alternately disposed, and the valley and the ridge can have a predetermined curvature (B). In such an embodiment, as shown in FIG. 13, it has been described that the valley and the ridge of the second serration portion 402c have a predetermined curvature, but not being limited thereto. In such an embodiment of the invention, one of the valley and the ridge of the second serration portion 402c may have a predetermined curvature. Referring to FIG. 14, in an alternative exemplary embodiment, the second serration portion 402c may have a form in which a plurality of hemi-cylinders (C) is arranged in the second direction D2, and the hemi-cylinders (C) may extend in a direction substantially parallel to the second direction D2.

In such an embodiment, the second serration portion 402c may have a pitch in a range of about 100 µm to about 500 µm, and a height in a range of about 80 µm to about 120 µm. An angle between a virtual line extending to the adjacent valley of the second serration portion 402c and a slanted surface between the valley and the ridge of the first serration portion 402b may be in a range of about 10 degrees to about 60 degrees.

In an alternative exemplary embodiment, both of the first serration portion 402b and the second serration portion 402c may be defined on the internal surface and the external surface of the lens 402 of the lens assembly 410, respectively.

In such embodiment, the first serration portion 402b or the second serration portion 402c allow the light emitted by the light emitters 401 (e.g., one of the first light-emitting device 401a and the second light-emitting device 401b) to be substantially uniformly diffused.

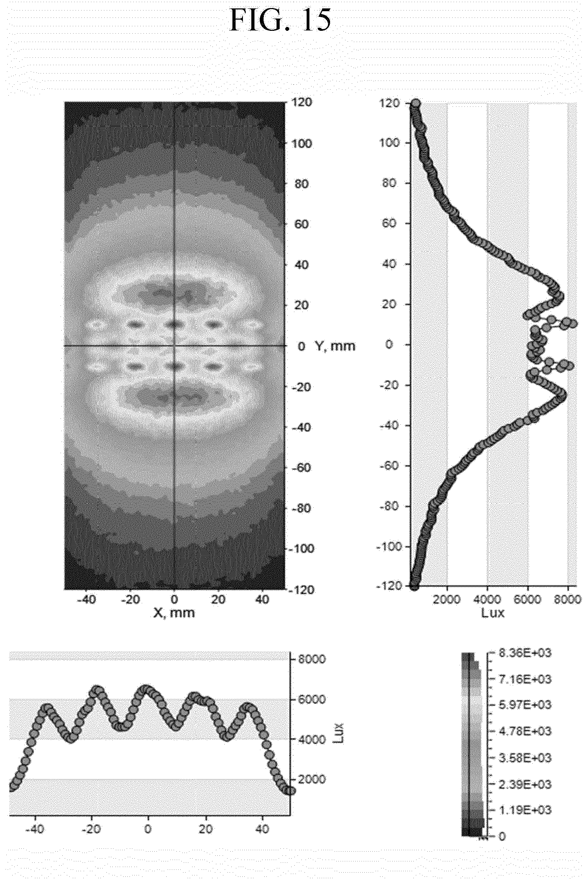

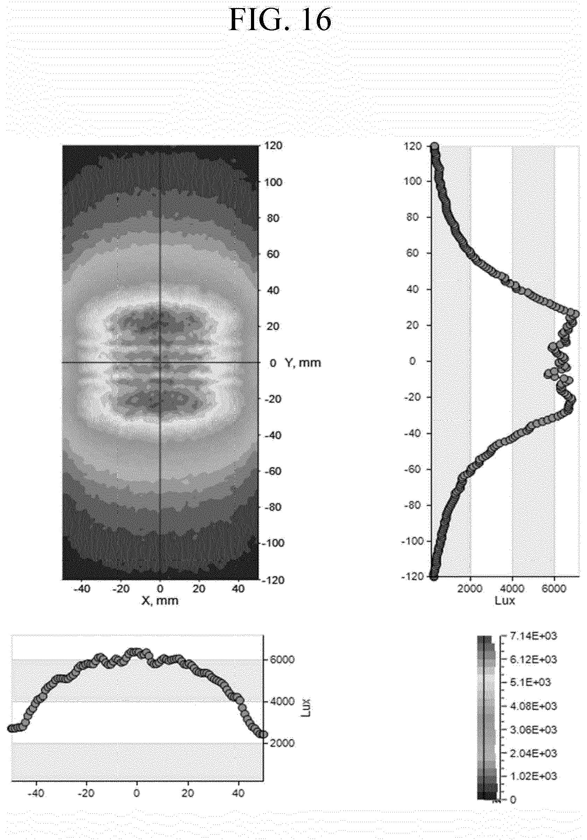

Exemplary embodiments including the first serration portion 402b or the second serration portion 402c will now be described with reference to FIG. 15 and FIG. 16. FIG. 15 and FIG. 16 are graphs showing results from an exemplary experiment.

Such an exemplary experiment is performed by measuring intensity of light emitted by the light-emitting device for a first case in which no serration portion is provided on the lens provided on the light-emitting device and intensity of light emitted by the light-emitting device for a second case in which the serration portion is formed on the lens, and corresponding results are shown in FIG. 15 and FIG. 16. FIG. 15 shows a result for the first case and FIG. 16 shows a result for the second case.

Referring to FIG. 15 and FIG. 16, the intensity of the light emitted by the light-emitting device is the greatest in a central region in which the light-emitting device is provided and the intensity of the light is decreased as being distant from the center portion, and in the second case in which the serration portion is provided on the lens, the intensity of the light emitted by the light-emitting device has a substantially uniform value in the central region. However, in the first case in which the serration portion is not provided on the lens, a region in which intensity of the light emitted by the light-emitting device is relatively strong and a region in which the intensity of the light is relatively weak exist in the central region. Therefore, in the second case in which the serration portion is provided on the lens, uniformity of the light emitted by the light-emitting device is substantially improved compared to the first case in which the serration portion is not provided on the lens.

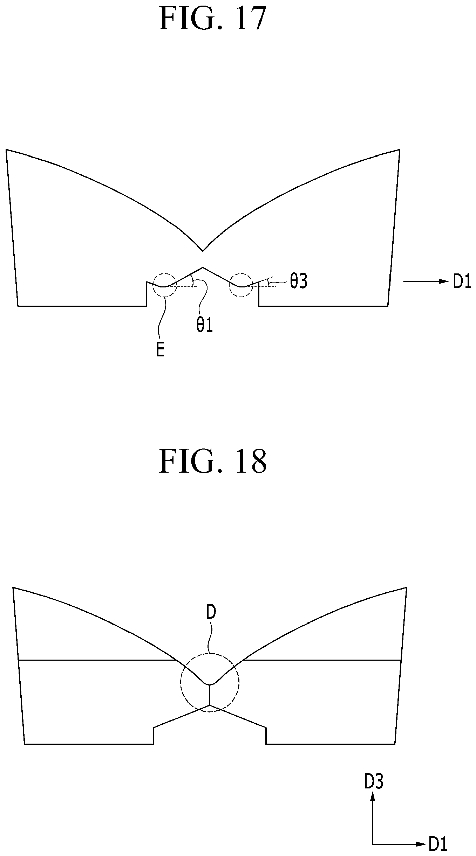

An alternative exemplary embodiment of a lens assembly for a backlight light source according to the invention will now be described with reference to FIG. 17. FIG. 17 shows a cross-sectional view of an alternative exemplary embodiment of a lens of a lens assembly for a backlight light source, according to the invention.

The lens of the lens assembly for a backlight light source shown in FIG. 17 is substantially the same as the lens 402 shown in FIG. 3 except for an internal surface thereof. The same or like elements shown in FIG. 13 have been labeled with the same reference characters as used above to describe the exemplary embodiments of the lens 402 shown in FIG. 3, and any repetitive detailed description thereof will hereinafter be omitted or simplified.

In an exemplary embodiment, as shown in FIG. 17, an internal surface of the lens includes a first slanted surface (S1) having a first angle (θ1) with respect to the first direction D1, and a second slanted surface (S2) between the first slanted surface (S1) and the internal side surface (s), configured to increase a height of a groove (A) when approaching to the internal side surface (s), and having a third angle (θ3) with respect to the first direction D1. In such an embodiment, the first angle (θ1) may be different from the third angle (θ3). Since the internal surface of the lens includes a plurality of slanted surfaces as described above, the refracted angle of the light emitted by the light-emitting device may be further varied such that the spreading direction of the light emitted by the light-emitting device is controllable.

Many characteristic of the exemplary embodiments of the lens assembly for a backlight light source described above are applicable to such an embodiment of the lens assembly for a backlight light source.

Another alternative exemplary embodiment of a lens assembly for a backlight light source according to the invention will now be described with reference to FIG. 18. FIG. 18 shows a cross-sectional view of another alternative exemplary embodiment of a lens of a lens assembly for a backlight light source, according to the invention.

The lens of the lens assembly for a backlight light source shown in FIG. 18 is substantially the same as the lens 402 shown in FIG. 3 except for a center portion thereof. The same or like elements shown in FIG. 13 have been labeled with the same reference characters as used above to describe the exemplary embodiments of the lens 402 shown in FIG. 3, and any repetitive detailed description thereof will hereinafter be omitted or simplified.

In an exemplary embodiment, as shown in FIG. 18, a curved portion (D) having a predetermined curvature is defined on the center axis (CL) of the lens 402. In such an embodiment, no light is refracted on the curved portion (D), such that the light emitted by the light-emitting device may emit in the third direction D3. In such an embodiment, the curvature of the curved portion (D) may be less than about 0.5 millimeters (mm).

In an exemplary embodiment, as described, the spreading direction of the light emitted by the light-emitting device may be controlled by providing the curved portion (D) having a predetermined curvature on the center axis (CL) of the lens 402.

Many characteristic of the exemplary embodiments of the lens assembly for a backlight light source described above are applicable to such an embodiment of the lens assembly for a backlight light source.
While the invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A lens assembly (410) for a backlight light source, comprising:
a plurality of light emitters (401); and
a lens (402) disposed on the light emitters (401) to cover the light emitters (401),
wherein the lens (402) is substantially symmetric with respect to a center axis (CL) thereof and has a bar shape extending in a direction parallel to the center axis (CL), and
the light emitters (401) are spaced apart from each other in the direction parallel to the center axis (CL)
**characterized in that**
each of the light emitters (401) comprises a first light-emitting device (401a) and a second light-emitting device (401b), and the first and second light-emitting devices (401a, 401b) emit light having different colors from each other, and
the first light-emitting device (401a) and the second light-emitting device (401b) of each of the light emitters (401) are spaced apart from each other in the direction parallel to the center axis (CL),
wherein the lens (402) includes two internal side surfaces (S) corresponding to side surfaces of the light emitters (401) and an internal top surface (t) corresponding to a top surface of the light emitters (401),
the internal top surface (t) of the lens (402) includes a first slanted surface (S1) which allows the lens (402) to be thinner as moving away from the internal side surface (S) to the center axis (CL), and
the two internal side surfaces (S) and the internal top surface (t) of the lens (402) define a shape substantially symmetrical with respect to the center axis (CL).

2. The lens assembly (410) of claim 1, wherein
light emitted by the light emitters (401) to the lens (402) is totally reflected on an external top surface (tt) of the lens (402),
the totally reflected light is diffused in a first direction (D1), which is substantially orthogonal to the center axis (CL), through an external side surface (SS) of the lens (402), and
first light emitted by the first light-emitting device (401a) and second light emitted by the second light-emitting device (401b) are diffused in the first direction (D1) and are mixed with each other.

3. The lens assembly (410) of claim 1, wherein
the first slanted surface (S1) of the internal top surface (t) forms a first angle (θ1) with a bottom surface of the lens (402), and
the first angle (θ1) is in a range of about 0 degree to about 45 degrees.

4. The lens assembly (410) of claims 1 or 3, wherein
the internal top surface (t) of the lens (402) further includes a second slanted surface (S2) inclined in a direction which is angled to the first slanted surface (S1).

5. The lens assembly (410) of one of claims 1 and 3 to 4, wherein
the lens (402) includes two external side surfaces (SS) corresponding to internal side surfaces (S) thereof, and an external top surface (tt) corresponding to an internal top surface (t) thereof,
the external top surface (tt) of the lens (402) includes a third slanted surface which allows a height of the lens (402) to increase as moving away from the center axis (CL) to the external side surface (SS), and
the two external side surfaces (SS) and the external top surface (tt) of the lens (402) define a shape substantially symmetrical with respect to the center axis (CL).

6. The lens assembly (410) of claim 5, wherein
the lens (402) has a first thickness (H1) at the center axis (CL) and becomes thicker as moving away from the center axis (CL), and
the first thickness (H1) is greater than about 0.5 millimeter.

7. The lens assembly (410) of claim 6, wherein
the external top surface (tt) of the lens (402) has a predetermined curvature on the center axis (CL).

8. The lens assembly (410) of one of claims 5 to 7, wherein
the lens (402) includes at least one of a first serration portion (402b) defined on the internal top surface (t), and a second serration portion (402c) is defined on the two external side surfaces (SS), and
each of the first and second serration portions (402b, 402c) comprises a recess portion and a protrusion portion, which are alternately disposed with each other.

9. The lens assembly (410) of claim 8, wherein
the at least one of the first serration portion (402b) and the second serration portion (402c) has a prism shape in which a valley (V) and a ridge (R) are alternately disposed.

10. The lens assembly (410) of claim 7, wherein
the predetermined curvature allows light emitted by the light emitters (401) to the lens (402) is emitted in a third direction (D3) which is substantially orthogonal to the center axis (CL) and a first direction (D1) which is substantially orthogonal to the center axis (CL).

11. A backlight unit (400) comprising:
a plurality of lens assemblies (410) according to one of claims 1 to 10 spaced apart from each other in a first direction (D1), which is substantially orthogonal to the center axis (CL).

## Patentansprüche

1. Linsenanordnung (410) für eine Lichtquelle einer Rückbeleuchtung, Folgendes umfassend:
eine Vielzahl von Lichtemittern (401); und
eine Linse (402), die auf den Lichtemittern (401) angeordnet ist, um die Lichtemitter (401) abzudecken,
wobei die Linse (402) im Wesentlichen symmetrisch in Bezug auf eine Mittelachse (CL) davon ist und eine Stabform aufweist, die sich in eine Richtung parallel zu der Mittelachse (CL) erstreckt, und
wobei die Lichtemitter (401) in der Richtung parallel zu der Mittelachse (CL) voneinander beabstandet sind,
**dadurch gekennzeichnet, dass**
jeder der Lichtemitter (401) eine erste lichtemittierende Vorrichtung (401a) und eine zweite lichtemittierende Vorrichtung (401b) umfasst, und wobei die erste und die zweite lichtemittierende Vorrichtung (401a, 401b) Licht emittieren, das voneinander unterschiedliche Farben aufweist, und
die erste lichtemittierende Vorrichtung (401a) und die zweite lichtemittierende Vorrichtung (401b) jedes der Lichtemitter (401) in der Richtung parallel zu der Mittelachse (CL) voneinander beabstandet sind, wobei die Linse (402) zwei interne Seitenflächen (S), die Seitenflächen der Lichtemitter (401) entsprechen, und eine interne obere Fläche (t) beinhaltet, die einer oberen Fläche der Lichtemitter (401) entspricht, die interne obere Fläche (t) der Linse (402) eine erste geneigte Fläche (S1) beinhaltet, die es der Linse (402) erlaubt, von der internen Seitenfläche (S) weg in Richtung der Mittelachse (CL) dünner zu sein, und
die zwei internen Seitenflächen (S) und die interne obere Fläche (t) der Linse (402) eine Form definieren, die im Wesentlichen symmetrisch in Bezug auf die Mittelachse (CL) ist.

2. Linsenanordnung (410) nach Anspruch 1, wobei
Licht, das durch die Lichtemitter (401) zu der Linse (402) emittiert wird, komplett auf einer externen oberen Fläche (tt) der Linse (402) reflektiert wird,
wobei das komplett reflektierte Licht in eine erste Richtung (D1), die im Wesentlichen orthogonal zu der Mittelachse (CL) ist, durch eine externe Seitenfläche (SS) der Linse (402) gestreut wird, und
wobei erstes Licht, das durch die erste lichtemittierende Vorrichtung (401a) emittiert wird, und zweites Licht, das durch die zweite lichtemittierende Vorrichtung (401b) emittiert wird, in die erste Richtung (D1) gestreut und miteinander gemischt werden.

3. Linsenanordnung (410) nach Anspruch 1, wobei
die erste geneigte Fläche (S1) der internen oberen Fläche (t) einen ersten Winkel (θ1) mit einer unteren Fläche der Linse (402) bildet, und
der erste Winkel (θ1) in einem Bereich von etwa 0 Grad bis etwa 45 Grad liegt.

4. Linsenanordnung (410) nach Anspruch 1 oder 3, wobei
die interne obere Fläche (t) der Linse (402) ferner eine zweite geneigte Fläche (S2) beinhaltet, die in eine Richtung abgeschrägt ist, die zu der ersten geneigten Fläche (S1) gewinkelt ist.

5. Linsenanordnung (410) nach einem der Ansprüche 1 und 3 bis 4, wobei
die Linse (402) zwei externe Seitenflächen (SS), die internen Seitenflächen (S) davon entsprechen, und eine externe obere Fläche (tt) beinhaltet, die einer internen oberen Fläche (t) davon entspricht,
die externe obere Fläche (tt) der Linse (402) eine dritte geneigte Fläche beinhaltet, die es einer Höhe der Linse (402) erlaubt, sich von der Mittelachse (CL) weg in Richtung der externen Seitenfläche (SS) zu vergrößern, und
die zwei externen Seitenflächen (SS) und die externe obere Fläche (tt) der Linse (402) eine Form definieren, die im Wesentlichen symmetrisch in Bezug auf die Mittelachse (CL) ist.

6. Linsenanordnung (410) nach Anspruch 5, wobei
die Linse (402) eine erste Dicke (H1) an der Mittelachse (CL) aufweist und mit zunehmendem Abstand von der Mittelachse (CL) dicker wird, und die erste Dicke (H1) größer als etwa 0,5 Millimeter ist.

7. Linsenanordnung (410) nach Anspruch 6, wobei
die externe obere Fläche (tt) der Linse (402) eine vorbestimmte Krümmung auf der Mittelachse (CL) aufweist.

8. Linsenanordnung (410) nach einem der Ansprüche 5 bis 7, wobei
die Linse (402) mindestens einen eines ersten Kerbungsabschnitts (402b), der auf der internen oberen Fläche (t) definiert ist, und eines zweiten Kerbungsabschnitts (402c) beinhaltet, der auf den zwei externen Seitenflächen (SS) definiert ist, und
jeder des ersten und des zweiten Kerbungsabschnitts (402b, 402c) einen Aussparungsabschnitt und einen Vorsprungsabschnitt umfasst, die abwechselnd zueinander angeordnet sind.

9. Linsenanordnung (410) nach Anspruch 8, wobei
der mindestens eine des ersten Kerbungsabschnitts (402b) und des zweiten Kerbungsabschnitts (402c) eine Prismaform aufweist, in welcher eine Senke (V) und eine Rippe (R) abwechselnd angeordnet sind.

10. Linsenanordnung (410) nach Anspruch 7, wobei
die vorbestimmte Krümmung es Licht erlaubt, das durch die Lichtemitter (401) zu der Linse (402) emittiert wird, in eine dritte Richtung (D3), die im Wesentlichen orthogonal zu der Mittelachse (CL) ist, und in eine erste Richtung (D1) zu emittieren, die im Wesentlichen orthogonal zu der Mittelachse (CL) ist.

11. Rückbeleuchtungseinheit (400), Folgendes umfassend:
eine Vielzahl von Linsenanordnungen (410) nach einem der Ansprüche 1 bis 10, die voneinander in einer ersten Richtung (D1) beabstandet sind, die im Wesentlichen orthogonal zu der Mittelachse (CL) ist.

## Revendications

1. Ensemble lentille (410) pour une source de lumière de rétroéclairage, comprenant :
une pluralité d'émetteurs de lumière (401) ; et
une lentille (402) disposée sur les émetteurs de lumière (401) pour couvrir les émetteurs de lumière (401),
dans lequel la lentille (402) est sensiblement symétrique par rapport à un axe central (CL) de celle-ci et a une forme de barre s'étendant dans une direction parallèle à l'axe central (CL), et
les émetteurs de lumière (401) sont espacés les uns des autres dans la direction parallèle à l'axe central (CL)
**caractérisé en ce que**
chacun des émetteurs de lumière (401) comprend un premier dispositif d'émission de lumière (401a) et un second dispositif d'émission de lumière (401b), et les premier et second dispositifs d'émission de lumière (401a, 401b) émettent une lumière ayant des couleurs différentes l'une de l'autre, et
le premier dispositif d'émission de lumière (401a) et le second dispositif d'émission de lumière (401b) de chacun des émetteurs de lumière (401) sont espacés l'un de l'autre dans la direction parallèle à l'axe central (CL), dans lequel la lentille (402) comporte deux surfaces de côté internes (S) correspondant à des surfaces de côté des émetteurs de lumière (401) et une surface de dessus interne (t) correspondant à une surface de dessus des émetteurs de lumière (401),
la surface de dessus interne (t) de la lentille (402) comporte une première surface oblique (S1) qui permet à la lentille (402) d'être plus mince en s'éloignant de la surface de côté interne (S) vers l'axe central (CL), et les deux surfaces de côté internes (S) et la surface de dessus interne (t) de la lentille (402) définissent une forme sensiblement symétrique par rapport à l'axe central (CL).

2. Ensemble lentille (410) selon la revendication 1, dans lequel
une lumière émise par les émetteurs de lumière (401) vers la lentille (402) est totalement réfléchie sur une surface de dessus externe (tt) de la lentille (402),
la lumière totalement réfléchie est diffusée dans une première direction (D1), qui est sensiblement orthogonale à l'axe central (CL), à travers une surface de côté externe (SS) de la lentille (402), et
une première lumière émise par le premier dispositif d'émission de lumière (401a) et une seconde lumière émise par le second dispositif d'émission de lumière (401b) sont diffusées dans la première direction (D1) et sont mélangées l'une à l'autre.

3. Ensemble lentille (410) selon la revendication 1, dans lequel
la première surface oblique (S1) de la surface de dessus interne (t) forme un premier angle (θ1) avec une surface de dessous de la lentille (402), et le premier angle (θ1) est dans une plage d'environ 0 degré à environ 45 degrés.

4. Ensemble lentille (410) selon les revendications 1 ou 3, dans lequel
la surface de dessus interne (t) de la lentille (402) comporte en outre une deuxième surface oblique (S2) inclinée dans une direction qui est en biais par rapport à la première surface oblique (S1).

5. Ensemble lentille (410) selon l'une des revendications 1 et 3 et 4, dans lequel
la lentille (402) comporte deux surfaces de côté externes (SS) correspondant à des surfaces de côté internes (S) de celle-ci, et une surface de dessus externe (tt) correspondant à une surface de dessus interne (t) de celle-ci,
la surface de dessus externe (tt) de la lentille (402) comporte une troisième surface oblique qui permet d'augmenter une hauteur de la lentille (402) en s'éloignant de l'axe central (CL) vers la surface de côté externe (SS), et
les deux surfaces de côté externes (SS) et la surface de dessus externe (tt) de la lentille (402) définissent une forme sensiblement symétrique par rapport à l'axe central (CL).

6. Ensemble lentille (410) selon la revendication 5, dans lequel
la lentille (402) a une première épaisseur (H1) au niveau de l'axe central (CL) et devient plus épaisse en s'éloignant de l'axe central (CL), et la première épaisseur (H1) est supérieure à environ 0,5 millimètre.

7. Ensemble lentille (410) selon la revendication 6, dans lequel
la surface de dessus externe (tt) de la lentille (402) a une courbure prédéterminée sur l'axe central (CL).

8. Ensemble lentille (410) selon l'une des revendications 5 à 7, dans lequel la lentille (402) comporte au moins l'une d'une première portion de dentelure (402b) définie sur la surface de dessus interne (t), et une seconde portion de dentelure (402c) est définie sur les deux surfaces de côté externes (SS), et
chacune des première et seconde portions de dentelure (402b, 402c) comprend une portion d'évidement et une portion de protubérance, qui sont disposées en alternance l'une par rapport à l'autre.

9. Ensemble lentille (410) selon la revendication 8, dans lequel
au moins l'une de la première portion de dentelure (402b) et de la seconde portion de dentelure (402c) a une forme de prisme dans laquelle un creux (V) et une crête (R) sont disposés en alternance.

10. Ensemble lentille (410) selon la revendication 7, dans lequel
la courbure prédéterminée permet à une lumière émise par les émetteurs de lumière (401) sur la lentille (402) d'être émise dans une troisième direction (D3) qui est sensiblement orthogonale à l'axe central (CL) et une première direction (D1) qui est sensiblement orthogonale à l'axe central (CL).

11. Unité de rétroéclairage (400) comprenant :
une pluralité d'ensembles lentille (410) selon l'une des revendications 1 à 10 espacés les uns des autres dans une première direction (D1), qui est sensiblement orthogonale à l'axe central (CL).
